(19) Europäisches Patentamt
European Patent Office
Office européen des brevets

(11) **EP 3 289 151 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **16718719.4**

(22) Anmeldetag: **28.04.2016**

(51) Int Cl.:
***B60S 9/10*** *(2006.01)*     ***B66C 23/80*** *(2006.01)*
***E02F 9/08*** *(2006.01)*     ***E04G 21/04*** *(2006.01)*

(86) Internationale Anmeldenummer:
**PCT/EP2016/059484**

(87) Internationale Veröffentlichungsnummer:
**WO 2016/174136 (03.11.2016 Gazette 2016/44)**

(54) **FAHRBARE ARBEITSMASCHINE UND VERFAHREN ZU DEREN BETRIEB**

DRIVABLE WORKING MACHINE AND METHOD FOR OPERATING SAME

MACHINE DE TRAVAIL ROULANTE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015 DE 102015208071**

(43) Veröffentlichungstag der Anmeldung:
**07.03.2018 Patentblatt 2018/10**

(73) Patentinhaber: **Putzmeister Engineering GmbH**
**72631 Aichtal (DE)**

(72) Erfinder:
• **KLEIN, Christiane**
**72631 Aichtal (DE)**
• **HUTH, Tobias**
**72622 Nürtingen (DE)**
• **MÜLLER, Ansgar**
**70184 Stuttgart (DE)**

(74) Vertreter: **Pfiz, Thomas et al**
**Pfiz/Gauss Patentanwälte PartmbB**
**Tübinger Strasse 26**
**70178 Stuttgart (DE)**

(56) Entgegenhaltungen:
**EP-A2- 1 847 505     CN-A- 101 457 589**
**DE-A1- 10 320 382     JP-A- H07 117 987**

EP 3 289 151 B1

**Beschreibung**

Die Erfindung betrifft eine fahrbare Arbeitsmaschine, insbesondere Autobetonpumpe, mit einem Fahrzeug, einem auf einer fahrzeugfesten Tragstruktur über ein Drehwerk drehbaren Betonverteilermast, und mehreren an der Tragstruktur angeordneten Stützbeinen zur Abstützung der Tragstruktur in einer Arbeitsstellung. Die Erfindung betrifft weiter ein Verfahren zum schwingungsarmen Betrieb einer solchen fahrbaren Arbeitsmaschine.

Bei fahrbaren Betonpumpen dieser Art (DE-102 46 447 A1) wird die Tragstruktur auf das Fahrgestell eines LKW-Chassis aufgesetzt. Die Tragstruktur bildet mit ihrem Mastbock bzw. Drehwerk die Schnittstelle zwischen dem Verteilermast und den Stützbeinen. Das vom Verteilermast verursachte Lastmoment wird dabei über den Mastbock auf die Stützbeine verteilt und in den Untergrund eingeleitet. Bei fahrbaren Betonpumpen besonders bevorzugt ist eine Tragstruktur, die vorne mit zwei teleskopierbaren und hinten mit zwei ausschwenkbaren Stützbeinen ausgestattet ist. Aufgrund der zunehmend in Leichtbauweise gestalteten Bauelemente sind Schwingungen ein immer größeres Problem. Neben den Mastbewegungen treten Störmomente durch die Bewegungen der Förderpumpe und die Umlenkung des Betonstroms auf. Nachteilig ist hier, dass der Heckaufbau mit dem Fülltrichter weit nach hinten übersteht. In der Arbeitsstellung sind die Hydraulikzylinder der Stützbeine in der Regel beidseitig ausgefahren. Bisher werden durch ein sogenanntes Wechselbetriebsventil die Hydraulikzylinder zunächst verriegelt, bevor die Hydraulikversorgung auf den Verteilermast umgeschaltet wird. Um ein Kippen zu vermeiden, sollten die Fahrzeugräder keinen Bodenkontakt besitzen, sondern über die Stützbeine abgehoben sein. In dieser Anordnung ist aber die Giersteifigkeit am geringsten. Gierbewegungen werden begünstigt durch das Spiel in den Stützbeinen und deren lange Biegestruktur, die wie ein Torsionsbalken wirkt. Die CN101457589 A offenbart eine fahrbare Arbeitsmaschine mit den Merkmalen des Oberbegriffs des Anspruchs 1 und ein Verfahren zum Betrieb einer fahrbare Arbeitsmaschine mit den Merkmalen des Oberbegriffs des Anspruchs 12.

Ausgehend hiervon liegt der Erfindung die Aufgabe zugrunde, die im Stand der Technik bekannten Arbeitsmaschinen und deren Betriebsweise weiter zu verbessern und Maßnahmen für eine Bewegungsminimierung der Tragstruktur in der Arbeitsstellung anzugeben.

Zur Lösung dieser Aufgabe wird die im Patentanspruch 1 bzw. 15 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, unerwünschte Auslenkungen durch regeltechnische Maßnahmen zu verringern. Dementsprechend wird erfindungsgemäß eine zur Kompensation einer Drehauslenkung der Tragstruktur aus der Arbeitsstellung ausgebildete Kompensationseinrichtung vorgeschlagen, die eine Erfassungseinheit zum Erkennen der Drehauslenkung aufweist und auf mindestens ein Stützbein über ein jeweiliges Stellglied zur Verringerung der Drehauslenkung einwirkt. Dadurch kann auch bei Leichtbauweise eine hohe Giersteifigkeit erreicht werden. Dies lässt sich mit minimalem Aufwand an Hardware unter Rückgriff auf vorhandene Bauteile und somit weitgehend gewichtsneutral realisieren.

Vorteilhafterweise besitzt die Erfassungseinheit einen Bewegungssensor zur Erfassung einer Gierschwingung, so dass eine genaue Kenntnis des dynamischen Verhaltens erlangt werden kann.

Um eine verbesserte Analyse des Zeitverhaltens zu ermöglichen, ist es vorteilhaft, wenn die Erfassungseinheit einen vorzugsweise am Heck des Fahrzeugs zweckmäßig im Bereich eines Fülltrichters angeordneten Beschleunigungssensor aufweist.

Der Einfluss von Mastbewegungen auf unerwünschte Drehauslenkungen der Tragstruktur lässt sich dadurch regeltechnisch berücksichtigen, dass die Erfassungseinheit einen Messaufnehmer zur direkten oder indirekten Erfassung eines bei der Drehung des Masts in die Tragstruktur eingeleiteten Drehmoments aufweist.

In diesem Zusammenhang ist es besonders vorteilhaft, wenn die Erfassungseinheit einen im Bereich des Drehwerks angeordneten Verformungssensor, insbesondere einen Dehnmessstreifen aufweist.

Für eine mittelbare Verwertung von Einflussparametern ist es von Vorteil, wenn die Erfassungseinheit einen Prozessor zur Ableitung einer Regelgröße aus einem Betriebsparameter des Masts und/oder einer Förderpumpe aufweist.

Um den Wirkzustand der Stellglieder zu erfassen, ist es günstig, wenn die Erfassungseinheit einen Stützkraftsensor zur Erfassung einer in Längsrichtung eines hydraulischen Stützzylinders des Stützbeins wirkenden Stützkraft aufweist.

Eine zur Verringerung von Totzeiten besonders vorteilhafte Ausführung sieht vor, dass die Kompensationseinrichtung einen Regler mit Störgrößenaufschaltung aufweist, wobei die Störgrößenaufschaltung eine aus der Betätigung des Betonverteilermasts und/oder der Förderpumpe resultierende Störgröße erfasst und auf den Reglereingang führt.

Um eine vorhandene Struktur für den Regelkreis bzw. die Steuerkette zu nutzen, ist es vorteilhaft, wenn das Stellglied einen zwischen der Tragstruktur und dem Stützbein angeordneten Hydraulikzylinder aufweist, wobei der Hydraulikzylinder zum Verschwenken des Stützbeins zwischen einer an der Tragstruktur anliegenden Fahrstellung und einer von der Tragstruktur abstehenden Stützstellung ausgebildet ist.

Eine weitere Verbesserung sieht vor, dass die Erfassungseinheit mindestens einen an dem Hydraulikzylinder angeschlossenen Drucksensor umfasst, und dass das Stellglied ein boden- und stangenseitig an dem Hydraulikzylinder angeschlossenes Wegeventil aufweist.

Denkbar ist es auch, dass die Erfassungseinheit einen die Zylinderlänge des Hydraulikzylinders erfassenden Messfühler aufweist. Darauf aufbauend kann eine Längenregelung zur Schwingungskompensation vorgesehen sein, wobei es dann günstig ist, die aufzubringenden Momente in ein Wegsignal umzurechnen.

In einer bevorzugten Ausführung als Autobetonpumpe ist eine zwischen einem Fülltrichter und dem Betonverteilermast angeschlossene, vorzugsweise als Zweizylinder-Kolbenpumpe ausgebildete Betonförderpumpe vorgesehen. Hier lässt sich durch die Kompensationseinrichtung eine Amplitudenverkleinerung von unerwünschten Fülltrichterschwingungen erreichen.

Um die Kippgefahr zu verringern, ist es vorteilhaft, wenn in der Arbeitsstellung die Räder des Fahrzeugs vom Boden abgehoben sind.

In verfahrensmäßiger Hinsicht wird die eingangs genannte Aufgabe dadurch gelöst, dass eine Drehauslenkung der Tragstruktur aus der Arbeitsstellung durch eine Kompensationseinrichtung aufgehoben wird, wobei die Kompensationseinrichtung über ein Stellglied auf mindestens ein Stützbein einwirkt.

Um regeltechnisch einzugreifen, ist es vorteilhaft, wenn eine Drehauslenkung der Tragstruktur durch eine Erfassungseinheit der Kompensationseinrichtung erkannt wird, und wenn aus der daraus generierten Störgröße über das Stellglied ein Gegenmoment auf das mindestens eine Stützbein zur Verringerung der Drehauslenkung erzeugt wird.

Zur Verbesserung der Regelgüte ist es von besonderem Vorteil, wenn die Kompensationseinrichtung durch einen Regler mit Störgrößenaufschaltung gebildet wird, wobei durch die Störgrößenaufschaltung eine aus der Betätigung des Betonverteilermasts und/oder einer Förderpumpe resultierende Störgröße erfasst und auf den Reglereingang geführt wird.

Um die vorhandene Stützbeinstruktur regeltechnisch einzubinden, ist es günstig, wenn als Stellglied ein zum horizontalen Verschwenken eines Stützbeins zwischen einer Fahrstellung und einer Stützstellung eingerichteter Hydraulikzylinder eingesetzt wird.

Im Folgenden wird die Erfindung anhand des in der Zeichnung dargestellten Ausführungsbeispiels näher erläutert. Es zeigen:

Fig. 1    eine schematisch vereinfachte Draufsicht einer Autobetonpumpe in einer Arbeitsstellung mit ausgestellten Stützbeinen und Betonverteilermast;

Fig. 2    ein Blockschaltbild einer Erfassungseinheit einer Kompensationseinrichtung zur Verringerung von Gierschwingungen in der Arbeitsstellung;

Fig. 3    ein Blockschaltbild eines Reglers der Kompensationseinrichtung.

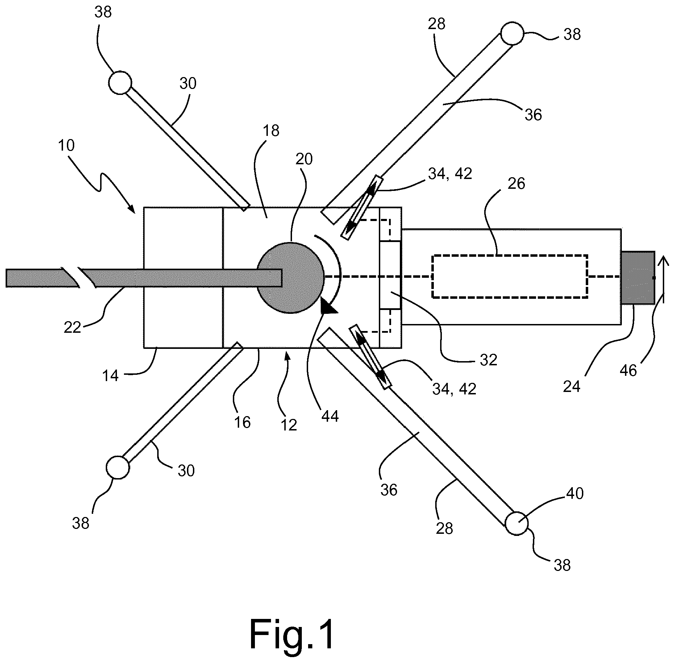

Die in Fig. 1 illustrierte Autobetonpumpe 10 umfasst ein Transportfahrzeug 12 mit Fahrerkabine 14 und Fahrgestell 16, einen Aufbaurahmen bzw. eine Tragstruktur 18, einen mittels Drehwerk 20 um eine Hochachse drehbaren mehrgliedrigen Betonverteilermast 22, eine zwischen einem Fülltrichter 24 und dem Betonverteilermast 22 angeschlossene, als Zweizylinder-Kolbenpumpe ausgebildete Förderpumpe 26 zum Fördern von Flüssigbeton und mehrere Stützbeine 28, 30 zum Abstützen der Tragstruktur 18 in einer für den Betonierbetrieb vorgesehenen Arbeitsstellung. Um eine Kompensation einer unerwünschten Gierschwingung der Tragstruktur 18 im Betonierbetrieb zu ermöglichen, ist weiterhin eine in Fig. 1 nur symbolisch dargestellte Kompensationseinrichtung 32 vorgesehen.

In der gezeigten Abstützkonfiguration sind die hinteren Stützbeine 28 als Schwenkbeine jeweils mittels eines Hydraulikzylinders 34 zwischen einer an der Tragstruktur 18 anliegenden Fahrstellung und einer davon abstehenden Stützstellung horizontal verschwenkbar, während die vorderen Stützbeine 30 in ihre Stützstellung teleskopierbar sind.

Die Hydraulikzylinder 34 sind bodenseitig an der Tragstruktur 18 und stangenseitig an einem horizontalen Schwenkarm 36 der Stützbeine 28 angelenkt. Damit lassen sich die Hydraulikzylinder 34 auch als Stellglied 42 der Kompensationseinrichtung 32 nutzen, um ungewollten Drehauslenkungen um die Fahrzeughochachse entgegenzuwirken.

In der Stützstellung kann jeweils ein Stützfuß 38 vertikal nach unten hydraulisch ausgefahren werden, bis die Fahrzeugräder vom Boden abheben. Dabei lässt sich die Stützkraft Fs mittels eines Kraftsensors 40 erfassen.

Beim Drehen des Verteilermasts 22 treten Gierbewegungen der Tragkonstruktion 18 auf, die zu großen Ausschlägen am Fülltrichter 24 führen und generell von Maschinisten als unangenehm empfunden werden. Ein Grund für diese Bewegungen sind die biege- und torsionselastischen Stützbeine 28, 30. Die Momente, die zum Gieren der Tragkonstruktion 18 führen würden, können durch gezieltes Aufbringen von Gegenmomenten mittels der Hydraulikzylinder 34 kompensiert werden.

Um dies zu ermöglichen, ist am Drehwerk 20 ein Messaufnehmer 44 zur direkten oder mittelbaren Erfassung eines bei der Mastdrehung in das Drehwerk 20 eingeleiteten Drehmoments $M_{DW}$ vorgesehen. Alternativ oder ergänzend ist am Fülltrichter 24 ein Bewegungssensor 46, insbesondere ein Beschleunigungssensor zur Erfassung einer Horizontalbeschleunigung $\ddot{x}$ angeordnet.

Zur direkten Bestimmung des belastenden Momentes $M_{DW}$ am Drehwerk 20 ist es notwendig, eine Verformung zu messen und darüber auf das Moment zu schließen. Für die Messung der Verformung als Längenänderung kommen verschiedene Messmethoden in Frage: Dehnmessstreifen, Saitendehnungsgeber, Seilzugsensoren, Piezoelemente, induktive Wegaufnehmer, magnetostriktive oder interferometrische Messungen, Triangulation oder Ultraschall. Bei den genannten Varianten wird die Messkette einmal kalibriert und dann das Drehmoment direkt gemessen.

Weiterhin kann das Moment $M_{DW}$ indirekt bestimmt werden. Hierzu können die Hydraulikdrücke am Motor des Drehwerks 20 gemessen und unter Zuhilfenahme von Schätzungen für den Einfluss der Öltemperatur, der Haltebremse und anderer Störungen das Moment $M_{DW}$ berechnet werden.

Das belastende Drehmoment $M_{DW}$ kann auch aus Steuerungsbefehlen mittels eines elektronischen Prozessors berechnet werden. Die Stellungen von Ventilen, die Maststellung und damit das Massenträgheitsmoment und konstruktive Größen wie die Getriebeübersetzung und das Verdrängungsvolumen des Drehwerksmotors erlauben grundsätzlich eine Berechnung des eingeleiteten Drehmomentes.

Für Einflüsse, die aus dem Pumpprozess der Förderpumpe 26 resultieren, können vorher Reaktionsabläufe in der Kompensationseinrichtung 32 programmiert und dann zum richtigen Zeitpunkt gestartet werden. Die notwendigen Informationen wie Zeitpunktes des Pumpstoßes, die Pumpengeschwindigkeit und Rohrweichengeschwindigkeit werden von Steuergeräten vorgegeben bzw. überwacht und sind somit verwertbar. Da im Normalfall die Störgrößen (Pumpprozess, Mastdrehung) schon vor ihrem Eintreten bekannt sind, können die Belastungen vorausberechnet werden und vor ihrem Eintreten Gegenmaßnahmen eingeleitet werden.

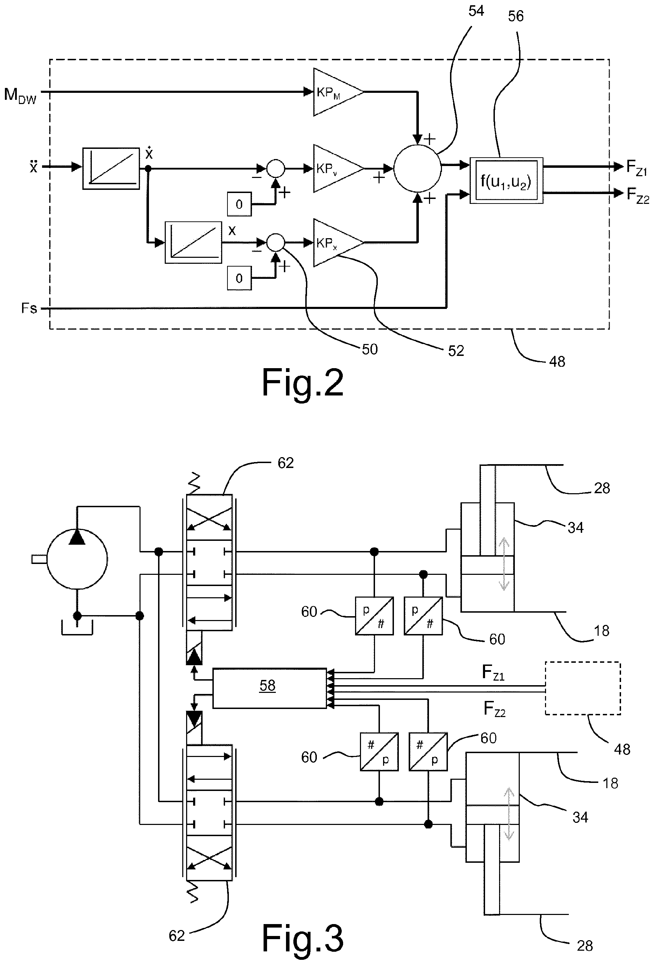

Fig. 2 veranschaulicht die Verarbeitung der Laststörgrößen in einer Erfassungseinheit 48 der Kompensationseinrichtung 32. Aus den erfassten Beschleunigungswerten $\ddot{x}$ werden die Geschwindigkeit $\dot{x}$ und die Amplitude $x$ als Eingangsgrößen ermittelt. An einem jeweiligen Vergleicher 50 wird Null als Sollwert eingespeist. Nachgeordnet folgt jeweils ein Verstärkungsglied 52 mit Proportionalverstärkung für Geschwindigkeit und Amplitude. Zusätzlich wird das Drehmoment $M_{DW}$ ebenfalls proportional verstärkt. Diese Eingangsgrößen werden an der Additionsstelle 54 aufgeschaltet. In einem Rechenglied 56 werden dann Sollwerte bzw. Eingangsstörgrößen Fz1 und Fz2 für die an den Hydraulikzylindern 34 einzustellenden Gegenkräfte ermittelt. Dabei wird auch die Stützkraft Fs berücksichtigt. Zweckmäßig sollte keine Kraft durch einen Hydraulikzylinder 34 aufgebracht werden, wenn der zugehörige Stützfuß 38 vom Boden abgehoben ist.

Die Arbeitsweise der Kompensationseinrichtung 32 beruht auf der Einstellung eines Momentengleichgewichts an der Tragstruktur 18. Unabhängig von der Lage der Momente muss deren Summe gleich Null sein, damit ein statischer Fall vorliegt. Das heißt, es tritt keine Bewegung auf, die Belastung ist zeitunabhängig. Wird nun also das eingeleitete Drehmoment an der Tragstruktur in dieser Weise kompensiert, steht diese still. Diese Aussagen gelten für alle Momente, die zu einer Gierbewegung führen würden.

Betrachtet wird beispielhaft das Moment $M_{DW}$, das infolge des Mastdrehens in die Tragstruktur 18 eingeleitet wird. Dieses Moment will die Tragstruktur 18 verdrehen (Gierbewegung). Das Gegenmoment wird mittels der Hydraulikzylinder 34 aufgebracht; da es sich um zwei Zylinder handelt, wird das Gegenmoment auf diese aufgeteilt und ergibt sich als Zylinderkraft Fz1 bzw. Fz2 multipliziert mit dem jeweils wirksamen Hebelarm a. Der Einfachheit halber wird hier angenommen, dass beide Stützbeine 28 mit gleichem Hebelarm

Kraft auf den Boden übertragen und somit beide gleichmäßig zur Kompensierung benutzt werden können. Dann sollte im Gleichgewicht gelten:

$$(Fz1 + Fz2)^*a - M_{DW} = 0$$

Anstelle der hydraulischen Aufbringung der Kraft zur Kompensierung der anregenden Drehmomente ist es auch denkbar, eine elektrische (z. B. Spindeltrieb) oder magnetische (z. B. geregelter Elektromagnet) Krafterzeugung vorzusehen.

Fig. 3 zeigt eine Regelungsschaltung der Kompensationseinrichtung 32 zur Ansteuerung der Hydraulikzylinder 34. Diese umfasst einen Regler 58 mit Störgrößenaufschaltung durch die Erfassungseinheit 48. Aus den mittels Drucksensoren 60 gemessenen Drücken und den Flächen von Kolben- und Stangenseite kann die Kraft, die jeder Zylinder 34 aufbringt, bestimmt werden. Dieser Ist-Wert wird mit einem Sollwert in dem Regler 58 verglichen. Entsprechend der Regelabweichung wird ein Wegeventil 62 betätigt, welches die Boden- und Stangenseite der Hydraulikzylinder 34 mit Hydrauliköl aus einer Pumpe 64 beaufschlagt.

**Patentansprüche**

1. Fahrbare Arbeitsmaschine, insbesondere Autobetonpumpe, mit einem Fahrzeug (12), einer fahrzeugfesten Tragstruktur (18) und einem darauf über ein Drehwerk (20) drehbaren Mast, insbesondere Betonverteilermast (22), und mehreren an der Tragstruktur (18) angeordneten Stützbeinen (28,30) zur Abstützung der Tragstruktur (18) in einer Arbeitsstellung, **gekennzeichnet durch** eine zur Kompensation einer Gierschwingung der Tragstruktur (18) aus der Arbeitsstellung ausgebildete Kompensationseinrichtung (32), die eine Erfassungseinheit (48) zum Erkennen der Gierschwingung aufweist und auf mindestens ein Stützbein (28) über ein jeweiliges Stellglied (42) zur Verringerung der Gierschwingung einwirkt.

2. Fahrbare Arbeitsmaschine nach Anspruch 1, **dadurch gekennzeichnet, dass** die Erfassungseinheit (48) einen Bewegungssensor (46), insbesondere Beschleunigungssensor oder Gierratensensor zur Erfassung der Gierschwingung aufweist.

3. Fahrbare Arbeitsmaschine nach Anspruch 1 oder 2, **dadurch gekennzeichnet, dass** die Erfassungseinheit (48) einen vorzugsweise am Heck des Fahrzeugs (12) angeordneten Beschleunigungssensor aufweist.

4. Fahrbare Arbeitsmaschine nach einem der Ansprüche 1 bis 3, **dadurch gekennzeichnet, dass** die Erfassungseinheit (48) einen Messaufnehmer (44) zur direkten oder indirekten Erfassung eines bei der Drehung des Betonverteilermasts (22) in die Tragstruktur (18) eingeleiteten Drehmoments aufweist.

5. Fahrbare Arbeitsmaschine nach einem der Ansprüche 1 bis 4, **dadurch gekennzeichnet, dass** die Erfassungseinheit (48) einen im Bereich des Drehwerks (20) angeordneten Verformungssensor, insbesondere einen Dehnmessstreifen aufweist.

6. Fahrbare Arbeitsmaschine nach einem der Ansprüche 1 bis 5, **dadurch gekennzeichnet, dass** die Erfassungseinheit (48) einen Prozessor zur Ableitung einer Regelgröße aus einem Betriebsparameter des Masts (22) und/oder einer an dem Fahrzeug (12) angeordneten Förderpumpe (26) aufweist.

7. Fahrbare Arbeitsmaschine nach einem der Ansprüche 1 bis 6, **dadurch gekennzeichnet, dass** die Kompensationseinrichtung (32) einen Regler (58) mit Störgrößenaufschaltung aufweist, wobei die Störgrößenaufschaltung eine aus der Betätigung des Masts (22) und/oder einer an dem Fahrzeug (12) angeordneten Förderpumpe (26) resultierende Störgröße sowie die aus der Erfassungseinheit (32) generierten Störgrößen erfasst und auf den Reglereingang führt.

8. Fahrbare Arbeitsmaschine nach einem der Ansprüche 1 bis 7, **dadurch gekennzeichnet, dass** das Stellglied (42) einen zwischen der Tragstruktur (18) und dem Stützbein (28) angeordneten Hydraulikzylinder (34) aufweist, wobei der Hydraulikzylinder (34) zum Verschwenken des Stützbeins (28) zwischen einer an der Tragstruktur (18) anliegenden Fahrstellung und einer von der Tragstruktur (18) abstehenden Stützstellung ausgebildet ist.

9. Fahrbare Arbeitsmaschine nach Anspruch 8, **dadurch gekennzeichnet, dass** die Erfassungseinheit (48) mindestens einen an dem Hydraulikzylinder (34) angeschlossenen Drucksensor (60) umfasst.

10. Fahrbare Arbeitsmaschine nach Anspruch 8 oder 9, **dadurch gekennzeichnet, dass** die Erfassungseinheit (48) einen die Zylinderlänge des Hydraulikzylinders (34) erfassenden Messfühler aufweist.

11. Fahrbare Arbeitsmaschine nach einem der Ansprüche 1 bis 10, **dadurch gekennzeichnet, dass** in der Arbeitsstellung die Räder des Fahrzeugs (12) vom Boden abgehoben sind.

12. Verfahren zum Betrieb einer fahrbare Arbeitsmaschine, insbesondere einer Autobetonpumpe nach einem der vorhergehenden Ansprüche, bei welchem eine auf einem Fahrzeug (12) aufgebaute Tragstruktur (18) über mehrere Stützbeine (28,30) in einer Arbeitsstellung abgestützt wird und ein Mast (22) über ein Drehwerk (20) auf der Tragstruktur (18) um eine Hochachse gedreht wird, **dadurch gekennzeichnet, dass** eine Gierschwingung der Tragstruktur (18) aus der Arbeitsstellung durch eine Kompensationseinrichtung (32) aufgehoben wird, wobei die Kompensationseinrichtung (32) über ein Stellglied (42) auf mindestens ein Stützbein (28) einwirkt.

13. Verfahren nach Anspruch 12, **dadurch gekennzeichnet, dass** eine Gierschwingung der Tragstruktur (18) durch eine Erfassungseinheit (48) der Kompensationseinrichtung (32) erkannt wird, und dass über das Stellglied (42) ein Gegenmoment auf das mindestens eine Stützbein (28) zur Verringerung der Gierschwingung erzeugt wird.

14. Verfahren nach Anspruch 12 oder 13, **dadurch gekennzeichnet, dass** die Kompensationseinrichtung (32) durch einen Regler (58) mit Störgrößenaufschaltung gebildet wird, wobei durch die Störgrößenaufschaltung eine aus der Betätigung des Betonverteilermasts (22) und/oder einer Förderpumpe (26) resultierende Störgröße sowie die aus der Erfassungseinheit (32) generierten Störgrößen erfasst und auf den Reglereingang geführt wird.

15. Verfahren nach einem der Ansprüche 12 bis 14, **dadurch gekennzeichnet, dass** als Stellglied (42) ein zum horizontalen Verschwenken eines Stützbeins (28) zwischen einer Fahrstellung und einer Stützstellung eingerichteter Hydraulikzylinder (34) eingesetzt wird.

**Claims**

1. A drivable working machine, particularly a truck-mounted concrete pump, comprising a vehicle (12), a vehicle-fixed carrying structure (18), a boom, particularly a concrete placing boom (22), that can be rotated thereon by means of a slewing gear (20), and a plurality of supporting legs (28, 30) arranged on the carrying structure (18) for supporting the carrying structure (18) in a working position, **characterized by** a compensation device (32), which is designed to compensate a yaw oscillation of the carrying structure (18) in the working position and has a sensing unit (48) for sensing the yaw oscillation and acts on at least one supporting leg (28) by means of an associated actuator (42) in order to reduce the yaw oscillation

2. The drivable working machine according to claim 1, **characterized in that** the sensing unit (48) has a motion sensor (46), particularly an acceleration sensor or yaw rate sensor, for sensing the yaw oscillation.

3. The drivable working machine according to claim 1 or 2, **characterized in that** the sensing unit (48) has an acceleration sensor preferably arranged on the rear end of the vehicle (12).

4. The drivable working machine according to one of claims 1 to 3, **characterized in that** the sensing unit (48) has a sensing device (44) for directly or indirectly sensing a torque applied to the carrying structure (18) when the concrete placing boom (22) is rotated.

5. The drivable working machine according to one of claims 1 to 4, **characterized in that** the sensing unit (48) has a deformation sensor, particularly a strain gauge, arranged in the region of the slewing gear (20).

6. The drivable working machine according to one of claims 1 to 5, **characterized in that** the sensing unit (48) has a processor for deriving a controlled variable from an operating parameter of the boom (22) and/or of a conveying pump (26) arranged on the vehicle (12).

7. The drivable working machine according to one of claims 1 to 6, **characterized in that** the compensation device (32) has a controller (58) having a feed-forward control system, wherein the feed-forward control system senses a disturbance variable resulting from the actuation of the boom (22) and/or a conveying pump (26) arranged on the vehicle (12) and senses the disturbance variables generated from the sensing unit (32) and leads said disturbance variables to the controller input.

8. The drivable working machine according to one of claims 1 to 7, **characterized in that** the actuator (42) has a hydraulic cylinder (34) arranged between the carrying structure (18) and the supporting leg (28), wherein the hydraulic cylinder (34) is designed to pivot the supporting leg (28) between a driving position lying against the carrying structure (18) and a supporting position protruding from the carrying structure (18).

9. The drivable working machine according to claim 8, **characterized in that** the sensing unit (48) comprises at least one pressure sensor (60) connected to the hydraulic cylinder (34).

10. The drivable working machine according to claim 8 or 9, **characterized in that** the sensing unit (48) has a sensing apparatus that senses the cylinder length of the hydraulic cylinder (34).

11. The drivable working machine according to one of claims 1 to 10, **characterized in that** the wheels of the vehicle (12) are lifted from the ground in the working position.

12. A method for operating a drivable working machine, particularly a truck-mounted concrete pump according to one of the preceding claims, wherein a carrying structure (18) mounted on a vehicle (12) is supported in a working position by means of a plurality of supporting legs (28, 30) and a boom (22) is rotated about a vertical axis on the carrying structure (18) by means of a slewing gear (20), **characterized in that** a yaw oscillation of the carrying structure (18) in the working position is compensated by a compensation device (32), wherein the compensation device (32) acts on at least one supporting leg (28) by means of an actuator (42).

13. The method according to claim 12, **characterized in that** a yaw oscillation of the carrying structure (18) is sensed by a sensing unit (48) of the compensation device (32), and that a counter-torque on the at least one supporting leg (28) is produced by means of the actuator (42) in order to reduce the yaw oscillation.

14. The method according to claim 12 or 13, **characterized in that** the compensation device (32) is formed by a controller (58) having a feed-forward control system, wherein the feed-forward control system senses a disturbance variable resulting from the actuation of the concrete placing boom (22) and/or a conveying pump (26) and the disturbance variables generated from the sensing unit (32) and leads said disturbance variables to the controller input.

15. The method according to one of claims 12 to 14, **characterized in that** a hydraulic cylinder (34) designed to horizontally pivot a supporting leg (28) between a driving position and a supporting position is used as the actuator (42).

**Revendications**

1. Machine de travail roulante, en particulier pompe à béton autotractée, comprenant un véhicule (12), une structure portante (18) fixée à demeure au véhicule, et un mât apte à effectuer des rotations par-dessus ladite structure par l'intermédiaire d'un dispositif de rotation (20), en particulier un mât distributeur de béton (22), et plusieurs jambes de force (28, 30) disposées contre la structure portante (18), destinées à servir d'appui à la structure portante (18) dans une position de travail, **caractérisée par** un mécanisme de compensation (32) conçu pour la compensation d'une oscillation de lacet de la structure portante (18) par rapport à la position de travail, qui présente une unité de détermination (48) pour la détection de l'oscillation de lacet et qui agit sur au moins une jambe de force (28) par l'intermédiaire d'un organe de réglage respectif (42) pour la réduction de l'oscillation de lacet.

2. Machine de travail roulante selon la revendication 1, **caractérisée en ce que** l'unité de détermination (48) présente un capteur du mouvement (46), en particulier un capteur de l'accélération ou un capteur du taux de lacet destiné à la détection de l'oscillation de lacet.

3. Machine de travail roulante selon la revendication 1 ou 2, **caractérisée en ce que** l'unité de détermination (48) présente un capteur de l'accélération disposé de préférence à l'arrière du véhicule (12).

4. Machine de travail roulante selon l'une quelconque des revendications 1 à 3, **caractérisée en ce que** l'unité de détermination (48) présente un capteur de mesure (44) destiné à l'enregistrement direct ou indirect d'un couple de rotation initié lors de la rotation du mât distributeur de béton (22) dans la structure portante (18).

5. Machine de travail roulante selon l'une quelconque des revendications 1 à 4, **caractérisée en ce que** l'unité de détermination (48) présente un capteur de la déformation, en particulier une jauge de contrainte, disposé dans la zone du dispositif de rotation (20).

6. Machine de travail roulante selon l'une quelconque des revendications 1 à 5, **caractérisé en ce que** l'unité de détermination (48) présente un processeur destiné à la dérivation d'une valeur de régulation à partir d'un paramètre d'exploitation du mât (22) et/ou d'une pompe de refoulement (26) disposée contre le véhicule (12).

7. Machine de travail roulante selon l'une quelconque des revendications 1 à 6, **caractérisée en ce que** le mécanisme de compensation (32) présente un dispositif de réglage (58) comprenant une compensation de perturbation ; dans laquelle la compensation de perturbation enregistre une perturbation résultant de l'exploitation du mât et/ou d'une pompe de refoulement (26) disposée contre le véhicule (12), de même que les perturbations générées à partir de l'unité de détermination (32), et les conduisent à l'entrée du dispositif de réglage.

8. Machine de travail roulante selon l'une quelconque des revendications 1 à 7, **caractérisée en ce que** l'organe de réglage (42) présente un cylindre hydraulique (34) disposé entre la structure portante (18) et la jambe de force (28) ; dans lequel le cylindre hydraulique (34) est réalisé pour faire pivoter la jambe de force (28) entre une position de roulement dans laquelle cette dernière est disposée contre la structure portante (18) et une position d'appui dans laquelle elle se situe à l'écart de la structure portante (18).

9. Machine de travail roulante selon la revendication 8, **caractérisée en ce que** l'unité de détermination (48) comprend au moins un capteur de pression (60) raccordé au cylindre hydraulique (34).

10. Machine de travail roulante selon la revendication 8 ou 9, **caractérisée en ce que** l'unité de détermination (48) présente une sonde de mesure qui enregistre la longueur du cylindre concernant le cylindre hydraulique (34).

11. Machine de travail roulante selon l'une quelconque des revendications 1 à 10, **caractérisée en ce que**, dans la position de travail, les roues du véhicule (12) sont soulevées par rapport au sol.

12. Procédé pour l'exploitation d'une machine de travail roulante, en particulier d'une pompe à béton autotractée selon l'une quelconque des revendications précédentes ; dans lequel une structure portante (18) montée sur un véhicule (12) prend appui dans une position de travail par le biais de plusieurs jambes de force (28, 30) et un mât (22) est mis en rotation par le biais d'un dispositif de rotation (20) sur la structure portante (18) autour d'un axe vertical ; **caractérisé en qu'**une oscillation de lacet de la structure portante (18) par rapport à la position de travail est supprimée par l'intermédiaire d'un mécanisme de compensation (32) ; dans lequel le mécanisme de compensation (32) agit en recourant à un organe de réglage (42) sur au moins une jambe de force (28).

13. Procédé selon la revendication 12, **caractérisé en ce qu'**une oscillation de lacet de la structure portante (18) est détectée par une unité de détermination (48) du mécanisme de compensation (32) ; et **en ce que**, via l'organe de réglage (42), un couple antagoniste est généré sur ladite au moins une jambe de force (28) dans le but de diminuer l'oscillation de lacet.

14. Procédé selon la revendication 12 ou 13, **caractérisé en ce que** le mécanisme de compensation (32) est réalisé via un dispositif de réglage (58) comprenant une compensation de perturbation ; dans lequel, grâce à la compensation de perturbation, une perturbation résultant de l'exploitation du mât distributeur de béton (22) et/ou d'une pompe de refoulement (26) est enregistrée, au même titre que les perturbations générées à partir de l'unité de détermination (32), et sont conduites à l'entrée du dispositif de réglage.

**15.** Procédé selon l'une quelconque des revendications 12 à 14, **caractérisé en ce que**, à titre d'organe de réglage (42), on met en oeuvre un cylindre hydraulique (34) conçu pour faire pivoter à l'horizontale une jambe de force (28) entre une position de roulement et une position d'appui.

Fig.1

## Fig.2

## Fig.3

**IN DER BESCHREIBUNG AUFGEFÜHRTE DOKUMENTE**

**In der Beschreibung aufgeführte Patentdokumente**

- DE 10246447 A1
- CN 101457589 A